# EUROPEAN PATENT APPLICATION

(11) **EP 4 632 805 A1**
(43) Date of publication of application: **15.10.2025**
(21) Application number: 24769901.0
(22) Date of filing: 11.03.2024
(51) Int. Cl.: H01L 23/28, H04N 23/57

(54) **CAMERA MODULE AND ELECTRONIC DEVICE**

(30) Priority: 14.03.2023 CN 202310268408
(71) Applicant: Huawei Technologies Co., Ltd., Shenzhen, Guangdong 518129 (CN)
(72) Inventor: FAN, Xiankai, Shenzhen, Guangdong 518129 (CN); GUAN, Tiankui, Shenzhen, Guangdong 518129 (CN); JIANG, Haixia, Shenzhen, Guangdong 518129 (CN); XIAO, Zhuojie, Shenzhen, Guangdong 518129 (CN); LI, Le, Shenzhen, Guangdong 518129 (CN)
(74) Representative: Maiwald GmbH
(86) International application number: PCT/CN2024/080925
(87) International publication number: WO 2024/188208

(57) **Abstract**

This application provides a camera module and an electronic device. The camera module includes a circuit assembly, a motor, a lens, an image sensor, an adhesive, and an optical filter. The motor is fastened to the circuit assembly. The lens is mounted on the motor. The image sensor is fastened and electrically connected to the circuit assembly. A first surface of the image sensor is disposed facing the lens. The first surface includes an imaging region and an edge region surrounding the imaging region. The adhesive is attached to the circuit assembly and surrounds the image sensor or the adhesive is attached to the edge region of the first surface. The optical filter is fastened to a surface that is of the adhesive and that is far away from the circuit assembly. For the adhesive, viscosity is greater than 10000 Cps, a thixotropic index is greater than 2, a Young's modulus at room temperature is within a range of 1000 MPa to 10000 MPa, and a coefficient of thermal expansion is less than 80 ppm/k. In this application, the optical filter is supported through the adhesive instead of a fixed step, to obtain a camera module with enhanced photographing performance and a reduced thickness.

## Description

This application claims priority to Chinese Patent Application No. 202310268408.6, filed with the China National Intellectual Property Administration on March 14, 2023, and entitled "CAMERA MODULE AND ELECTRONIC DEVICE", which is incorporated herein by reference in its entirety.

### TECHNICAL FIELD

This application relates to the field of image shooting technologies, and in particular, to a camera module and an electronic device.

### BACKGROUND

With continuous improvement of performance of a mobile phone, a camera module, as an important module component of the mobile phone is challenged by thinning and improvement of photographing performance. For a camera module currently on the market, a size of a lens usually needs to be increased, to improve photographing performance. This increases a height of the camera module, making it impossible for the camera module to implement a thinning design while improving photographing performance.

### SUMMARY

Embodiments of this application provide a camera module and an electronic device including the camera module, aiming to obtain a camera module that has a small thickness and that is capable of implementing a thinning design and an electronic device while improving photographing performance.

A first aspect provides a camera module. The camera module includes a circuit assembly, a motor, a lens, an image sensor, an adhesive, and an optical filter. The motor is fastened to the circuit assembly. The lens is mounted on the motor. The image sensor is fastened and electrically connected to the circuit assembly. A first surface of the image sensor is disposed facing the lens. The first surface includes an imaging region and an edge region surrounding the imaging region. The adhesive is attached to the circuit assembly and surrounds the image sensor or the adhesive is attached to the edge region of the first surface. The optical filter is fastened to a surface that is of the adhesive and that is far away from the circuit assembly. For the adhesive, viscosity is greater than 10000 Cps, a thixotropic index is greater than 2, a Young's modulus at room temperature is within a range of 1000 MPa to 10000 MPa, and a coefficient of thermal expansion is less than 80 ppm/k.

It may be understood that, compared with a conventional camera module, the camera module in this implementation eliminates the need for a fixed step, and implements assembly of the optical filter through attachment of the adhesive and fastening of the optical filter to the adhesive. In this case, the optical filter may be completely decoupled from a base, to effectively avoid a risk of deformation or even fracture of the optical filter caused by deformation of the base due to environmental stress. In this way, the optical filter in this implementation can be resistant to deformation caused by the environmental stress, only when the optical filter meets low microstrain of a three-point bending fracture surface, to effectively reduce manufacturing costs of the optical filter.

In addition, the optical filter is supported through the adhesive instead of the fixed step, so that a thickness of an adhesive layer in the flange focal length of the camera module and a thickness of the fixed step can be further effectively reduced. In this way, when photographing performance parameters are the same, for the camera module in this implementation, a flange focal length of the camera module can be effectively reduced, to help implement a thin setting of the camera module. When module heights are the same, for the camera module in this implementation, a length of an entity part of the lens may be increased, to improve photographing performance of the camera module. In other words, for the camera module in this implementation, the flange focal length may be shortened, to improve photographing performance of the camera module and implement a thin setting.

In addition, when the adhesive meets the foregoing physical parameter requirement, the adhesive has higher strength. This can effectively avoid a problem that the optical filter imposes excessive pressure on the adhesive in a mounting process, causing the adhesive to collapse or break. In addition, the adhesive has sufficient strength, so that a height of the adhesive can be ensured and the adhesive can stably carry the optical filter. In addition, higher strength of the adhesive can further reduce impact of the environmental stress on the adhesive, to avoid risks such as deformation of the adhesive due to external environmental stress as well as deformation and fracture of the optical filter due to deformation of the adhesive.

In addition, when the adhesive meets the foregoing physical parameter requirement, the adhesive has proper surface tension and moisture, so that when the optical filter is fastened from above the adhesive, a part of the adhesive is attached to a surface that is of the optical filter and that is close to the image sensor, and epitaxially extends along the surface, to avoid a problem that the adhesive overflows to the image sensor in an assembly process of the optical filter and causes contamination to the image sensor.

In a possible implementation, for the adhesive, viscosity is greater than 15000 Cps, a thixotropic index is greater than 4, a Young's modulus at room temperature is within a range of 1000 MPa to 6000 MPa, and a coefficient of thermal expansion is less than 60 ppm/k. It may be understood that when the adhesive meets the foregoing physical parameter requirement, the adhesive has higher strength, to better resist external environmental stress, and avoid deformation of the adhesive caused by the external environmental stress. In this case, the adhesive can better ensure the height of the adhesive, so that the adhesive can carry the optical filter more stably, thereby avoiding a case in which the optical filter collides with the connection wire, causing the connection wire to break. In addition, higher strength of the adhesive can further better avoid fracture of the optical filter caused by deformation of the adhesive.

In a possible implementation, the camera module further includes a connection wire, the connection wire connect the image sensor to the circuit assembly, the adhesive wraps at least a part of the connection wire, a gap is formed between the optical filter and a highest point of the connection wire, the highest point of the connection wire is a point that is of the connection wire and that is closest to the lens in a first direction, and the first direction is parallel to an optical axis of the lens. In this way, while supporting and fastening the optical filter, the adhesive can further protect the connection wire, to avoid damage to the connection wire. In addition, compared with a conventional camera module in which a connection wire is fully exposed to air, the camera module in this implementation allows unrestricted bending and shaking of the connection wire inside. In this implementation, the adhesive can wrap at least a part of the connection wire 30, so that the connection wire does not collide with another component inside the module due to bending and shaking, to avoid a breaking problem of the connection wire.

In a possible implementation, a size, in the first direction, of the optical filter and the highest point of the connection wire is a safe distance for the connection wire. The safe distance for the connection wire is greater than or equal to 30 micrometers. In this way, there is a safe distance between the optical filter and the highest point of the connection wire, so that collision between the optical filter and the connection wire can be effectively avoided, to reduce a risk of breaking and damaging the connection wire.

In a possible implementation, the adhesive wraps the highest point of the connection wire. In this way, when wrapping at least the part of the connection wire, the adhesive wraps the highest point of the connection wire to fasten the highest point of the connection wire, so that the connection wire does not collide with another component inside the module due to bending and shaking, to prevent the connection wire from being broken. In addition, the safe distance for the connection wire in this implementation may be far less than a safe distance for the connection wire in the conventional camera module, so that a thickness of the camera module can be further reduced. In other words, compared with the conventional camera module, the camera module in this implementation can effectively reduce a thickness of the adhesive layer, a thickness of the fixed step, and a safe distance for a part of the connection wire.

In a possible implementation, a size of the adhesive in the first direction is within a range of 50 micrometers to 400 micrometers. In this case, the adhesive has a specific height, so that the optical filter is supported and a safe distance exists between the optical filter and the highest point of the connection wire, to reduce a breakage risk of the connection wire or a fracture risk of the optical filter.

In a possible implementation, the circuit assembly includes a circuit board and a reinforcing plate. The motor is fastened to the circuit board. The reinforcing plate is fastened to a surface that is of the circuit board and that is far away from the motor. The circuit board is provided with a mounting hole. At least a part of the reinforcing plate is exposed from the mounting hole. The image sensor is fastened to the reinforcing plate and at least a part of the image sensor is located in the mounting hole. The adhesive is attached to a surface that is of the circuit board and that is far away from the reinforcing plate. A size, in the first direction, of the highest point of the connection wire and the surface that is of the circuit board and that is far away from the reinforcing plate is a first distance. The size of the adhesive in the first direction is equal to a sum of the safe distance for the connection wire and the first distance. In this case, a height of the adhesive is limited, so that the height is equal to the sum of the safe distance for the connection wire and the first distance, to ensure that a safe distance exists between the highest point of the connection wire and the optical filter. This can effectively prevent the optical filter from being collided with the connection wire in a mounting process, so that the connection wire is not broken, to effectively reduce a risk of damage to the connection wire, and help improve a yield rate of the camera module.

In a possible implementation, the circuit assembly includes a circuit board. The motor is fastened to the circuit board. The image sensor is fastened to a surface that is of the circuit board and that is close to the lens. The adhesive is attached to the image sensor. A size, in the first direction, of the highest point of the connection wire and a surface that is of the image sensor and that is far away from the circuit board is a second distance. The size of the adhesive in the first direction is equal to a sum of the safe distance for the connection wire and the second distance. In this case, a height of the adhesive is limited, so that the height is equal to the sum of the safe distance for the connection wire and the second distance, to ensure that a safe distance may exist between the highest point of the connection wire and the optical filter. This can effectively prevent the optical filter from being collided with the connection wire in a mounting process, so that the connection wire is not broken, to effectively reduce a risk of damage to the connection wire, and help improve a yield rate of the camera module.

In a possible implementation, the adhesive is an ultraviolet curing adhesive. In this way, the adhesive can be cured by irradiating the adhesive with ultraviolet light. A curing speed of the adhesive is fast, which helps ensure the height of the adhesive.

In a possible implementation, the adhesive, the optical filter, and the image sensor jointly enclose internal space of the adhesive; or the adhesive, the optical filter, and the circuit assembly jointly enclose internal space of the adhesive. The adhesive is used to prevent dust from entering the internal space of the adhesive. In this way, the adhesive can seal space between the optical filter and the image sensor (namely, the internal space of the adhesive), so that dust and the like can be effectively prevented from entering the space between the optical filter and the image sensor, to avoid an imaging shadow. Therefore, photographing performance of the camera module is not affected.

In a possible implementation, the adhesive, the optical filter, and the image sensor jointly enclose internal space of the adhesive; or the adhesive, the optical filter, and the circuit assembly jointly enclose internal space of the adhesive. The adhesive has an opening. The opening penetrates an inner circumferential surface and an outer circumferential surface of the adhesive. The camera module further includes a breathable membrane. The breathable membrane is attached to the adhesive and covers the opening. The breathable membrane cooperates with the adhesive to prevent dust from entering the internal space of the adhesive. The breathable membrane is used to allow gas to pass through. In this case, the breathable membrane can prevent dust from entering the internal space of the adhesive, and allow gas to circulate in the internal space of the adhesive and internal space of the camera module, so that pressure of the internal space of the adhesive may be kept the same as pressure of the internal space of the camera module, that is, pressure of inner and outer sides of the optical filter is the same. This effectively prevents the optical filter from being deformed in an assembly process of the camera module due to process baking stress and pressure difference stress on both sides of the optical filter, to effectively reduce a fracture risk of the optical filter.

In a possible implementation, microstrain of a three-point bending fracture surface of the optical filter is greater than 2000 ue. It may be understood that, when the optical filter meets the foregoing physical parameter requirement, strength of the optical filter is high, so that impact of environmental stress on the optical filter can be effectively reduced, to reduce a fracture risk of the optical filter and prolong a service life of the camera module.

In a possible implementation, microstrain of a three-point bending fracture surface of the optical filter is greater than 4000 ue. In this case, the optical filter has higher strength, to better resist external environmental stress, and avoid deformation and fracture of the optical filter caused by the external environmental stress.

In a possible implementation, the optical filter includes an edge part and a filtering part. The edge part surrounds the filtering part. The edge part is fastened to the adhesive. The filtering part faces the image sensor. The camera module further includes a first dust-proof adhesive. The first dust-proof adhesive is located on a side that is of the optical filter and that is far away from the adhesive, and is attached to the edge part. The first dust-proof adhesive is used to absorb dust. It may be understood that there is a gap between a lens and a motor that are of some camera modules. As a result, some dirty substances may enter the camera module through the gap between the lens and the motor, and fall into a filtering part of the optical filter, thus causing an imaging shadow. In this implementation, the camera module is provided with the first dust-proof adhesive on the edge part of the optical filter, so that dirty substances entering the camera module can be adhered, to prevent the dirty substances from falling on the filtering part of the optical filter or the imaging region of the image sensor. This reduces a risk of an imaging shadow in the camera module, and effectively improves photographing performance of the camera module.

In a possible implementation, the camera module further includes a second dust-proof adhesive, and the second dust-proof adhesive is attached to a surface that is of the circuit assembly and that is close to the lens, and surrounds the adhesive. It may be understood that there is a gap between a lens and a motor that are of some camera modules. As a result, some dirty substances may enter the camera module through the gap between the lens and the motor, and fall into a filtering part of the optical filter, thus causing an imaging shadow. In this implementation, the camera module is provided with the second dust-proof adhesive around the adhesive, so that dirty substances entering the camera module can be adhered, to prevent the dirty substances from falling on the filtering part of the optical filter or the imaging region of the image sensor. This reduces a risk of an imaging shadow in the camera module, and effectively improves photographing performance of the camera module.

In a possible implementation, the camera module further includes a base. The base is fastened to the circuit assembly. The motor is fastened to a surface that is of the base and that is far away from the circuit assembly. A part of a surface that is of the base and that is close to the lens forms an anti-collision step surface. The anti-collision step surface may be located between the lens and the optical filter. In this case, the anti-collision step surface may be used to prevent the lens from moving downward and colliding with the optical filter under extreme mechanical stress and therefore avoid fracture of the optical filter.

In a possible implementation, the adhesive includes a first part and a second part. The first part is connected between the optical filter and the circuit assembly. The second part is connected to the first part and the circuit assembly. The second part is used to reinforce the circuit assembly. In this case, the adhesive may be used to support and fasten the optical filter, to reduce a back focal length of the camera module. In addition, the second part of the adhesive may perform structural reinforcement on the circuit assembly, to effectively increase strength of the circuit assembly, improve deformation resistance of the circuit assembly, and reduce a risk of damage to the circuit assembly. This effectively improves overall structural stability of the camera module and prolongs a service life of the camera module.

According to a second aspect, an electronic device is provided. The electronic device includes an image processor and the camera module. The image processor is communicatively connected to the camera module. The image processor is configured to obtain image data from the camera module and process the image data. It may be understood that, for the camera module in this implementation, a flange focal length may be shortened, to improve photographing performance of the camera module and implement a thin setting. This helps obtain an electronic device with enhanced photographing performance and a reduced thickness.

According to a third aspect, a method for assembling an optical filter is provided. The method for assembling the optical filter includes: fastening the optical filter to a mounting part of a mounting tool; placing a supporting part of the mounting tool on a surface of a circuit board, so that the optical filter is in contact with a surface of an uncured adhesive; curing the adhesive; and removing the mounting tool.

It may be understood that, compared with an implementation in which the adhesive is cured before the optical filter is assembled, in this implementation, the adhesive is cured after the optical filter is assembled, so that the mounting tool can better control a height of the adhesive, to accurately reach a design height of the adhesive, and accurately control a safe distance between the optical filter and a highest point of a connection wire (namely, a safe distance for the connection wire). This helps ensure assembly precision of a camera module and improve a yield rate of the camera module.

In a possible implementation, a height of the supporting part is equal to a sum of a thickness of the optical filter and a height of the adhesive. It may be understood that, in this implementation, the height of the supporting part of the mounting tool is equal to the sum of the thickness of the optical filter of the camera module and the height of the adhesive. In this way, in a process in which the mounting tool is used to assist in assembly of the optical filter, the mounting tool may be used to ensure that the optical filter is assembled at a specific height from a surface of a circuit assembly or an image sensor, to avoid a case in which the optical filter collapses onto the adhesive in the assembly process and collides with the connection wire, causing the connection wire to break. This helps improve an assembly yield rate of the camera module. The optical filter is assembled at a specific height by using the mounting tool, which can reduce, to a large extent, a probability that the optical filter collides with the connection wire. This can ensure safety of the optical filter as long as the safe distance for the connection wire meets a small size. In other words, the safe distance for the connection wire that is required for assembling the optical filter by using the assembly method in this implementation may be far less than a safe distance for the connection wire that is required for assembling the optical filter by using a conventional method, which helps implement a thinning design of the camera module.

### BRIEF DESCRIPTION OF DRAWINGS

To describe the technical solutions in the implementations of this application or in the background more clearly, the following describes the accompanying drawings for describing the implementations of this application or the background.
FIG. 1 is a diagram of a structure of an electronic device in some implementations according to an implementation of this application;
FIG. 2 is a diagram of an internal structure of a camera module;
FIG. 3 is an enlarged diagram of the camera module shown in FIG. 2 at a position B;
FIG. 4 is a sectional view of a camera module of the electronic device shown in FIG. 1 on an A-A line in an implementation;
FIG. 5 is a sectional view of the camera module shown in FIG. 4 at another view angle;
FIG. 6 is an enlarged diagram of the camera module shown in FIG. 4 at a position C;
FIG. 7 is a schematic flowchart of a method for assembling an optical filter of the camera module shown in FIG. 4;
FIG. 8 is a diagram of a partial process of the assembly method shown in FIG. 7;
FIG. 9 is a diagram of a partial process of the assembly method shown in FIG. 7;
FIG. 10 is a sectional view of the camera module shown in FIG. 4 in another implementation;
FIG. 11 is a sectional view of the camera module shown in FIG. 10 at another view angle;
FIG. 12 is a sectional view of the camera module shown in FIG. 4 in still another implementation; and
FIG. 13 is a sectional view of the camera module shown in FIG. 12 in another implementation.

### DESCRIPTION OF EMBODIMENTS

The following describes implementations of this application with reference to the accompanying drawings in the implementations of this application.

In descriptions of implementations of this application, it should be noted that the terms "mounting" and "connection" should be understood in a broad sense, unless otherwise specified and limited. For example, "connection" may be a detachable connection or a non-detachable connection, or may be a direct connection or a connection through an intermediate medium. "Fastening" means that two parts are connected to each other and a relative position relationship remains unchanged after the two parts are connected. Orientation terms mentioned in implementations of this application, for example, "above", "below", "inner", and "outer", merely indicate directions with reference to accompanying drawings. Therefore, the orientation terms are used to better and more clearly describe and understand implementations of this application, but not to indicate or imply that a specified apparatus or element needs to have a specific orientation or be constructed or operated in a specific orientation. Therefore, this cannot be construed as a limitation on implementations of this application. "A plurality of" means at least two.

The terms "first" and "second" in implementations of this application are merely intended for a purpose of description, and shall not be understood as an indication or implication of relative importance or implicit indication of a quantity of indicated technical features. Therefore, a feature limited by "first" or "second" may explicitly or implicitly include one or more features.

Reference to "an implementation", "some implementations", or the like described in implementations of this application means that one or more implementations of this application include a specific feature, structure, or characteristic described with reference to the implementation. Therefore, statements such as "in an implementation", "in some implementations", "in another implementation", and "in still other implementation" that appear at different places in this specification do not necessarily mean a same implementation. Instead, the statements mean "one or more but not all of implementations", unless otherwise specifically emphasized in another manner. The terms "include", "have", and their variants all mean "include but are not limited to", unless otherwise specifically emphasized in another manner.

In addition, similar areas mentioned in implementations of this application mean that the areas are equal or roughly equal. For example, an area of A being close to an area of B means that the area of A is equal to the area of B, the area of A is slightly greater than the area of B, or the area of A is slightly less than the area of B.

It can be understood that specific implementations described herein are merely intended to explain a related invention, but not to limit the invention. In addition, it should be noted that, for ease of description, only a part related to the invention is shown in the accompanying drawings.

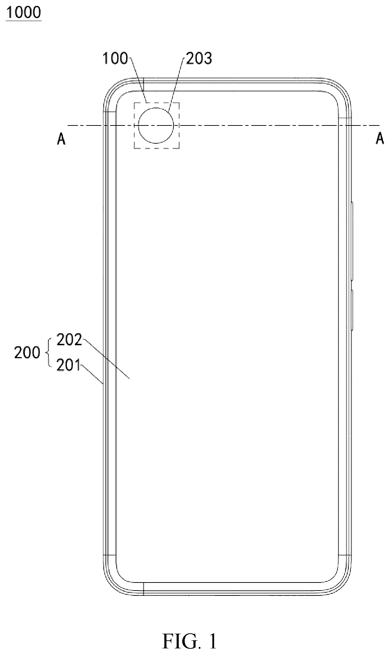

FIG. 1 is a diagram of a structure of an electronic device 1000 in some implementations according to an implementation of this application.

As shown in FIG. 1, the electronic device 1000 may be a device with a camera function, such as a mobile phone, a tablet personal computer (tablet personal computer), a laptop computer (laptop computer), a personal digital assistant (personal digital assistant, PDA), a camera, a personal computer, a notebook computer, an in-vehicle device, a wearable device, augmented reality (augmented reality, AR) glasses, an AR helmet, virtual reality (virtual reality, VR) glasses, or a VR helmet. The electronic device 1000 shown in FIG. 1 is described by using a mobile phone as an example.

For example, the electronic device 1000 may include a camera module 100, a device housing 200, an image processor (not shown in the figure), and a display (not shown in the figure). The camera module 100 may be a rear-facing camera module, or may be a front-facing camera module. It should be noted that FIG. 1 and the following related accompanying drawings only schematically show some components included in the electronic device 1000. Actual shapes, actual sizes, actual positions, and actual structures of these components are not limited by FIG. 1 and the following accompanying drawings. In addition, when the electronic device 1000 is a device in another form, the electronic device 1000 may not include a screen.

As shown in FIG. 1, the device housing 200 may include a frame 201 and a rear cover 202. The rear cover 202 is fastened to the frame 201. For example, the rear cover 202 may be fastened to the frame 201 by using an adhesive. The rear cover 202 and the frame 201 may alternatively be an integrally formed structure, that is, the rear cover 202 and the frame 201 are an integral structure.

In addition, the screen may be located on a side, away from the rear cover 202, of the frame 201. In this case, the screen and the rear cover 202 are respectively located on two sides of the frame 201. The screen, the frame 201, and the rear cover 202 jointly enclose an internal cavity of the electronic device 1000. The internal cavity of the electronic device 1000 may be configured to accommodate the camera module 100, the image processor, and other components of the electronic device 1000, such as a battery, a receiver, or a microphone. The screen may be a flat screen or a curved screen.

For example, the camera module 100 may be fastened to a side that is of the screen and that faces the rear cover 202. The rear cover 202 may be provided with a light through hole 203. A shape of the light through hole 203 is not limited to a circular shape shown in FIG. 1. The light through hole 203 is used to connect inside of the electronic device 1000 to outside of the electronic device 1000. Light outside the electronic device 1000 may enter the inside of the electronic device 1000 through the light through hole 203. The camera module 100 may collect ambient light that enters the inside of the electronic device 1000.

For example, the camera module 100 may be a common camera module (that is, a direction of an optical axis of the camera module 100 is a thickness direction of the electronic device 1000). In some implementations, the camera module 100 may alternatively be a periscope camera module (that is, a direction of an optical axis of the camera module 100 is a width direction of the electronic device 1000).

For example, the image processor may be communicatively connected to the camera module 100. The image processor may be configured to obtain image data from the camera module 100 and process the image data. The communication connection between the camera module 100 and the image processor may be for data transmission implemented through an electrical connection like cabling, or data transmission implemented through coupling. It may be understood that the camera module 100 may be alternatively communicatively connected to the image processor in another manner in which data transmission can be implemented.

A function of the image processor is to perform optimization processing on a digital image signal through a series of complex mathematical algorithm operations and finally transmit a processed signal to a display. The image processor may be an image processing chip or a digital signal processing chip.

It may be understood that a mounting position of the camera module 100 of the electronic device 1000 in the implementation shown in FIG. 1 is merely an example, and the mounting position of the camera module 100 is not strictly limited in this application. In some implementations, the camera module 100 may be alternatively mounted in another position of the electronic device 1000. For example, the camera module 100 may be alternatively mounted in a middle upper part or an upper right corner of a back of the electronic device 1000. In another implementation, the electronic device 1000 may include a device body and an auxiliary component that can be rotated, moved, or disassembled relative to the device body. In this case, the camera module 100 may be further disposed on the auxiliary component.

The foregoing specifically describes a structure of the electronic device 1000. The following specifically describes a structure of the camera module 100 in some implementations with reference to related accompanying drawings.

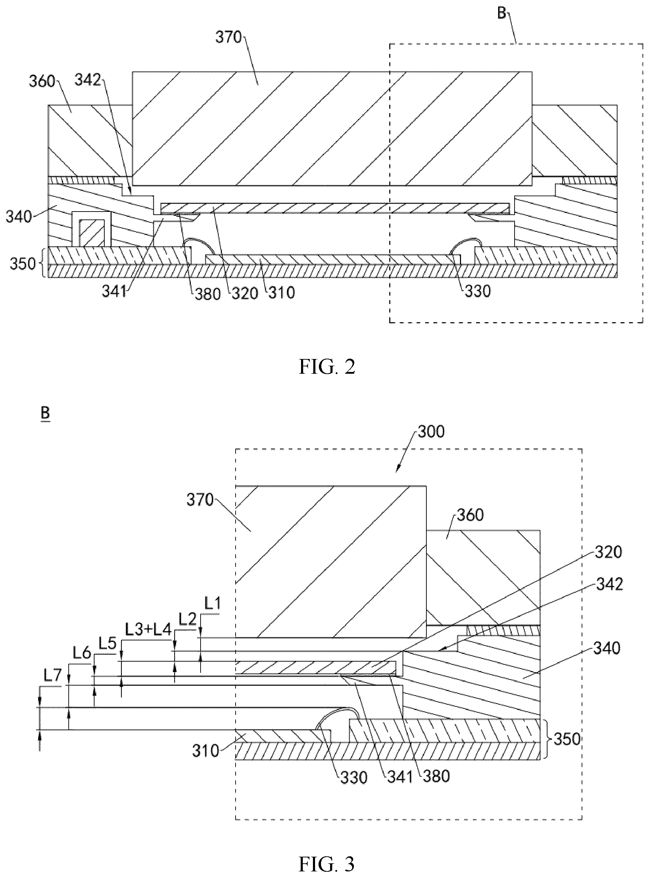

FIG. 2 is a diagram of an internal structure of a camera module 300. FIG. 3 is an enlarged diagram of the camera module 300 shown in FIG. 2 at a position B.

As shown in FIG. 2 and FIG. 3, the camera module 300 may include an image sensor 310, an optical filter 320, a plurality of connection wires 330, a base 340, a circuit assembly 350, a motor 360, and a lens 370. The image sensor 310 may also be referred to as a photosensitive chip or a photosensitive element. The image sensor 310 may be configured to: collect ambient light, and convert image information carried in the ambient light into an electrical signal. The motor 360 may be fastened to a top surface of the base 340 in a manner of bonding or the like. The circuit assembly 350 may be fastened to a bottom surface of the base 340 in a manner of bonding or the like. The lens 370 may be mounted on the motor 360. The image sensor 310 may be fastened to the circuit assembly 350, and is electrically connected to the circuit assembly 350 through the plurality of connection wires 330.

A fixed step 341 may be disposed on an inner circumferential surface of the base 340. In a manner of bonding or the like, the optical filter 320 may be fastened to a surface that is of the fixed step 341 and that is far away from the image sensor 310. For example, the camera module 300 may further include an adhesive layer 380. The adhesive layer 380 may be fastened to the surface that is of the fixed step 341 and that is far away from the image sensor 310. The optical filter 320 may be fastened to a surface that is of the adhesive layer 380 and that is far away from the fixed step 341. For example, the adhesive layer 380 may be a double-sided adhesive. A part of a surface that is of the base 340 and that is close to the lens 370 forms an anti-collision step surface 342. The anti-collision step surface 342 may be located between the lens 370 and the optical filter 320.

It may be understood that a flange focal length (Flange Focal Length, FBL) of the camera module 300 means a distance between a last flange surface of the lens 370 in the camera module 300 and an imaging surface of the image sensor 310. The flange focal length of the camera module 300 may also be referred to as a flange focal distance. The flange focal length of the camera module 300 may include a plurality of parts. In the camera module 300 shown in FIG. 3, the flange focal length may include a safe distance L1 for the lens, a height L2 of an anti-collision step, a thickness L3 of the optical filter, a thickness L4 of the adhesive layer, a thickness L5 of the fixed step, a safe distance L6 for the connection wire, and a height L7 of the connection wire. The safe distance L1 for the lens is a distance between the last flange surface of the lens 370 and the anti-collision step surface 342. The height L2 of the anti-collision step is a distance between the anti-collision step surface 342 and a surface that is of the optical filter 320 and that is far away from the lens 370. The safe distance L6 for the connection wire is a distance between a surface that is of the fixed step 341 and that is far away from the lens 370 and a highest point of the connection wire 330.

In some implementations, the safe distance L1 for the lens may be 230 micrometers, the height L2 of the anti-collision step may be 40 micrometers, the thickness L3 of the optical filter may be 210 micrometers, the thickness L4 of the adhesive layer may be 30 micrometers, the thickness L5 of the fixed step may be 200 micrometers, the safe distance L6 for the connection wire may be 100 micrometers, and the height L7 of the connection wire may be 130 micrometers. In this case, the flange focal length of the camera module 100 may be 940 micrometers.

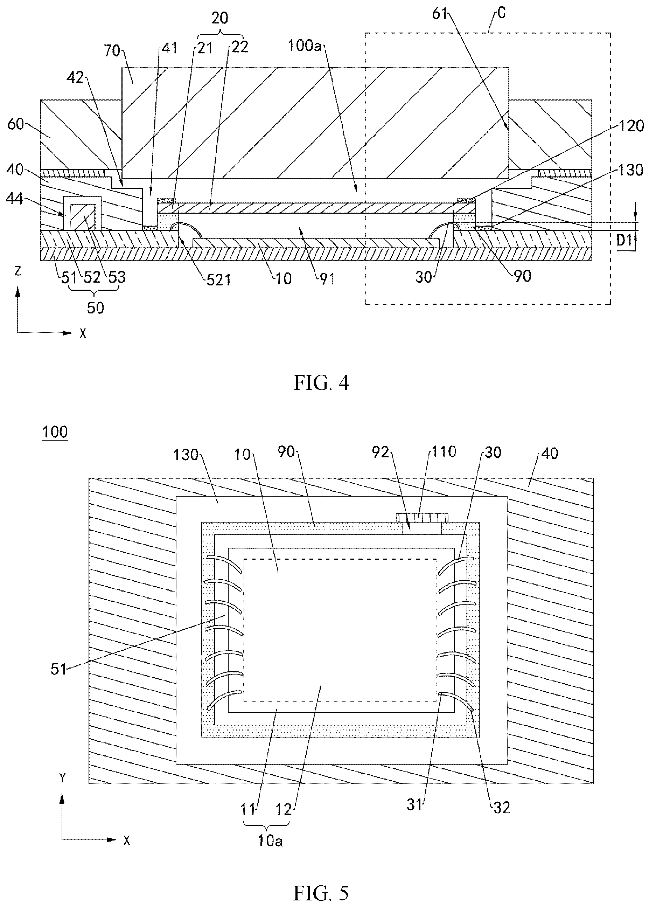

FIG. 4 is a sectional view of the camera module 100 of the electronic device 1000 shown in FIG. 1 on an A-A line in an implementation. FIG. 5 is a sectional view of the camera module 100 shown in FIG. 4 at another view angle.

As shown in FIG. 4 and FIG. 5, the camera module 100 may include an image sensor 10, an optical filter 20, a plurality of connection wires 30, a base 40, a circuit assembly 50, a motor 60, a lens 70, and an adhesive 90. For ease of description, a width direction of the camera module 100 is defined as an X-axis, a length direction of the camera module 100 is a Y-axis, and a thickness direction of the camera module 100 is a Z-axis. It may be understood that a coordinate system of the camera module 100 may be flexibly set based on a specific actual requirement. A direction of an optical axis of the lens 70 and a direction of an optical axis of the camera module 100 are a same direction, that is, a first direction (namely, a Z-axis direction in this implementation).

For example, the base 40 may include a top surface and a bottom surface that are disposed in opposite directions. The base 40 may be provided with a through hole 41. The through hole 41 may penetrate the top surface and the bottom surface of the base 40. A part of a surface that is of the base 40 and that is close to the lens 70 forms an anti-collision step surface 42. An orientation of the anti-collision step surface 42 is consistent with an orientation of the top surface of the base 40. The anti-collision step surface 42 may be used to prevent the lens 70 from moving downward and colliding with the optical filter 20 under extreme mechanical stress and therefore avoid fracture of the optical filter 20.

For example, the motor 60 may be fastened to the top surface of the base 40. For example, the motor 60 may be fastened to the top surface of the base 40 in a manner of bonding or the like. The lens 70 may be mounted on the motor 60. The motor 60 may be configured to drive the lens 70 to move in the direction of the optical axis of the camera module 100, to implement a focusing function of the camera module 100. A light-emitting side of the lens 70 may face the through hole 41.

For example, the circuit assembly 50 may be fastened to the bottom surface of the base 40. For example, the circuit assembly 50 may also be fastened to the bottom surface of the base 40 in a manner of bonding or the like. For example, the circuit assembly 50 may include a reinforcing plate 51 and a circuit board 52. In a manner of bonding or the like, the reinforcing plate 51 may be fastened to a surface that is of the circuit board 52 and that is far away from the motor 60. A surface that is of the circuit board 52 and that is far away from the reinforcing plate 51 may be fastened to the bottom surface of the base 40 in a manner of bonding or the like. In this case, space enclosed by the base 40, the circuit assembly 50, the motor 60, and the lens 70 may form internal space 100a of the camera module 100.

For example, the circuit board 52 may be a rigid circuit board. The reinforcing plate 51 may be a metal plate. For example, the reinforcing plate 51 may be a stainless steel plate. The reinforcing plate 51 may be fastened to the circuit board 52 by using a conductive adhesive, and is electrically connected to the circuit board 52. In this way, the reinforcing plate 51 may be grounded by using the circuit board 52, and the reinforcing plate 51 may perform structural reinforcement on the circuit board 52, to enhance structural strength of the circuit board 52 and improve structural stability of the camera module 100.

For example, the circuit board 52 may be provided with a mounting hole 521. The mounting hole 521 may be disposed opposite to and in communication with the through hole 41 of the base 40. A part of the surface of the reinforcing plate 51 may be exposed through the mounting hole 521. The image sensor 10 may be fastened to the surface that is of the reinforcing plate 51 and that is exposed through the mounting hole 521. In this case, the image sensor 10 may be at least partially located in the mounting hole 521. It may be understood that the mounting hole 521 is provided on the circuit board 52, and the image sensor 10 is disposed in the mounting hole 521, so that the image sensor 10 can use thickness space of the circuit board 52 to a large extent, to help implement a thinning design of the camera module 100.

In some implementations, the circuit assembly 50 may further include an electronic component 53. The electronic component 53 may be fastened to the surface that is of the circuit board 52 and that is far away from the reinforcing plate 51. A part that is of a structure of the base 40 and that is close to the electronic component 53 may be recessed inward to form avoidance space 44, to avoid the electronic component 53. The electronic component 53 may be a capacitor, a resistor, or another component.

In some implementations, the circuit board 52 may alternatively be a flexible circuit board or a flexible-rigid circuit board, and the reinforcing plate 51 may alternatively be a plate made of another conductive material.

In some other implementations, the circuit assembly 50 may alternatively not include the reinforcing plate 51. The image sensor 10 may be fastened to a surface that is of the circuit board 52 and that faces the lens 70.

In some other implementations, the circuit board 52 may alternatively not be provided with the mounting hole 521. The image sensor 10 may be fastened to the surface that is of the circuit board 52 and that is far away from the reinforcing plate 51.

As shown in FIG. 4 and FIG. 5, the image sensor 10 may be roughly square. The image sensor 10 may include a first surface 10a disposed facing the lens 70. The first surface 10a of the image sensor 10 may include an edge region 11 and an imaging region 12. The edge region 11 of the image sensor 10 may be connected to a periphery of the imaging region 12. In this case, the edge region 11 may surround the imaging region 12. It should be understood that, in FIG. 4, the edge region 11 and the imaging region 12 of the image sensor 10 are schematically obtained through division by using dashed lines.

For example, the connection wire 30 may include a first end 31 and a second end 32 that are disposed opposite to each other. In a manner of welding or the like, the first end 31 of each connection wire 30 may be fastened to the edge region 11 of the image sensor 10, and is electrically connected to the image sensor 10. In a manner of welding or the like, the second end 32 of each connection wire 30 may be fastened to the surface that is of the circuit board 52 and that is far away from the reinforcing plate 51, and is electrically connected to the circuit board 52. The second end 32 of each connection wire 30 may be fastened to an edge part that is of the circuit board 52 and that is close to the mounting hole 521. In this case, the image sensor 10 may be electrically connected to the circuit board 52 through the plurality of connection wires 30.

For example, the adhesive 90 may be attached to the surface that is of the circuit board 52 and that is far away from the reinforcing plate 51, and surround the mounting hole 521, that is, surround the image sensor 10. In this case, the adhesive 90 may be roughly frame-shaped. The adhesive 90 may wrap at least a part of each connection wire 30. For example, the adhesive 90 may cover the second end 32 of each connection wire 30. A sum of an area of a projection of the adhesive 90 on a first plane (namely, an X-Y plane in this implementation) and an area of a region enclosed by the projection may be greater than an area of a projection of the image sensor 10 on the first plane. For example, the adhesive 90 may have specific structural strength. In this case, the adhesive 90 can better protect the connection wire 30 and avoid damage to the connection wire 30. In addition, specific structural strength of the adhesive 90 can further ensure a height of the adhesive 90. In this way, when the optical filter 20 is fastened to the adhesive 90, the adhesive 90 can better bear the optical filter 20. The adhesive 90 may have specific structural strength through selection.

For example, the adhesive 90 may further wrap a highest point of the connection wire 30 while wrapping at least the part of the connection wire 30. The highest point of the connection wire 30 is a point that is of the connection wire 30 and that is closest to the lens 70 in the Z-axis direction (namely, the first direction in this implementation). It may be understood that the image sensor 10 in this implementation is fastened to the reinforcing plate 51 and is located in the mounting hole 521 of the circuit board 52, so that the highest point of the connection wire 30 may be close to the circuit board 52. In this way, when the adhesive 90 is attached to a surface of the circuit board 52, the adhesive 90 can wrap the highest point of the connection wire 30 while wrapping at least the part of the connection wire 30, so that the connection wire 30 can be better protected, and the highest point of the connection wire 30 can be prevented from being collided with the optical filter 20 or another internal component of the camera module 100, thereby avoiding damage to the connection wire 30.

For example, the optical filter 20 may include an edge part 21 and a filtering part 22. The edge part 21 of the optical filter 20 may be connected to a periphery of the filtering part 22. In this case, the edge part 21 of the optical filter 20 may surround the filtering part 22. The optical filter 20 may be a blue glass (Blue glass, BG) filter, an infrared cut-off filter (Infrared Ray Cut filter, IRCF), or the like.

For example, microstrain of a three-point bending fracture surface of the optical filter 20 may be greater than 2000 ue. For example, the microstrain of the three-point bending fracture surface of the optical filter 20 may be 3400 ue, 4000 ue, 6000 ue, 6800 ue, 8200 ue, or the like. In this way, strength of the optical filter 20 is high, so that impact of environmental stress on the optical filter 20 can be effectively reduced, to reduce a fracture risk of the optical filter 20 and prolong a service life of the camera module 100. It should be understood that, in FIG. 4, the edge part 21 and the filtering part 22 of the optical filter 20 are schematically obtained through division by using dashed lines.

For example, the edge part 21 of the optical filter 20 may be fastened to a surface that is of the adhesive 90 and that is far away from the circuit board 52. In this case, the anti-collision step surface 42 of the base 40 may be located between the optical filter 20 and the lens 70. A gap may be formed between the optical filter 20 and the highest point of the connection wire 30.

For example, an area of a projection of the optical filter 20 on the first plane may be close to a sum of an area of a projection of the adhesive 90 on the first plane and an area of a region enclosed by the projection. In other words, the area of the projection of the optical filter 20 on the first plane may be greater than the area of the projection of the image sensor 10 on the first plane. The filtering part 22 of the optical filter 20 may be disposed facing the image sensor 10. Space enclosed by the adhesive 90, the optical filter 20, and the image sensor 10 may form internal space 91 of the adhesive 90. In this way, the adhesive 90 can seal space between the optical filter 20 and the image sensor 10 (namely, the internal space 91 of the adhesive 90 in this implementation), so that dust and the like can be effectively prevented from entering the space between the optical filter 20 and the image sensor 10, to avoid an imaging shadow. Therefore, photographing performance of the camera module 100 is not affected.

For example, a size, in the Z-axis direction, of the highest point of the connection wire 30 and a surface that is of the circuit board 52 and that is close to the lens 70 is a first distance D1. A size of the adhesive 90 in the Z-axis direction (referred to as a height of the adhesive 90 below) may be greater than the first distance D1. In this case, the adhesive 90 can better wrap the connection wire 30, to protect the connection wire 30 and prevent the connection wire 30 from being broken. In addition, the height of the adhesive 90 is greater than the first distance D1, to avoid a problem that, when the optical filter 20 is assembled, the optical filter 20 collides with the connection wire 30, causing damage to the connection wire 30.

For example, a height difference, in the Z-axis direction, between the highest point of the connection wire 30 and a surface that is of the optical filter 20 and that is close to the image sensor 10 is a safe distance L6 for the connection wire. The safe distance L6 for the connection wire may be greater than or equal to 30 micrometers. For example, the safe distance L6 for the connection wire may be 30 micrometers, 50 micrometers, 85 micrometers, 92 micrometers, 120 micrometers, or the like.

For example, the height of the adhesive 90 may be alternatively equal to a sum of the safe distance L6 for the connection wire and the first distance D1. The height of the adhesive 90 may be within a range of 50 micrometers to 400 micrometers. For example, the height of the adhesive 90 may be 60 micrometers, 80 micrometers, 100 micrometers, 200 micrometers, 320 micrometers, or the like. In this case, the height of the adhesive 90 is limited, so that the height is equal to the sum of the safe distance L6 for the connection wire and the first distance D1, to ensure that a safe distance exists between the highest point of the connection wire 30 and the surface that is of the optical filter 20 and that is close to the image sensor 10. This can effectively prevent the optical filter 20 from being collided with the connection wire 30 in a mounting process, so that the connection wire 30 is not broken, to effectively reduce a risk of damage to the connection wire 30, and help improve a yield rate of the camera module 100.

For example, the adhesive 90 may be an epoxy resin adhesive. For the adhesive 90, viscosity may be greater than 10000 Cps, a thixotropic index (Thixotropic Index, TI) may be greater than 2, a Young's modulus at room temperature may be within a range of 1000 MPa to 10000 MPa, and a coefficient of thermal expansion (coefficient of thermal expansion, CTE) may be less than 80 ppm/k. For example, the viscosity of the adhesive 90 may be 20000 Cps, 30000 Cps, 45000 Cps, 46000 Cps, 50500 Cps, or the like. The thixotropic index of the adhesive 90 may be 3.6, 5, 5.5, 6.4, 8, or the like. The Young's modulus at room temperature of the adhesive 90 may be 1500 MPa, 2200 MPa, 3000 MPa, 3800 MPa, 5000 MPa, or the like. The coefficient of thermal expansion of the adhesive 90 may be 26 ppm/k, 35 ppm/k, 43 ppm/k, 50 ppm/k, 58 ppm/k, or the like.

It should be noted that, in this implementation, physical parameters of the adhesive 90 are measured at a normal temperature, normal humidity, and normal pressure. The normal temperature indicates that the temperature is about 25°C. The normal humidity indicates that relative humidity in the air is about 50%. The normal pressure indicates that atmospheric pressure is about 101 kPa. The viscosity and the thixotropic index of the adhesive 90 may be measured by using a Brookfield viscometer in a range of 0.1 rpm to 50 rpm when a rotor range is appropriate. The Young's modulus at room temperature may be measured through thermal dynamic mechanical analysis (Dynamic mechanical analysis, DMA). The coefficient of thermal expansion may be measured by a thermal mechanical analyzer (Thermal Mechanical Analyzer, TMA).

It may be understood that, when the adhesive 90 meets the foregoing physical parameter requirement, the adhesive 90 has higher strength. This can effectively avoid a problem that the optical filter 20 applies excessive pressure to the adhesive 90 in a mounting process; and consequently, the adhesive 90 collapses and the connection wire 30 is exposed, causing the connection wire 30 to break. In addition, the adhesive 90 has sufficient strength, so that the height of the adhesive 90 can be ensured, and the adhesive 90 can stably carry the optical filter 20, to ensure a safe distance between the optical filter 20 and the highest point of the connection wire 30. In addition, higher strength of the adhesive 90 can further reduce impact of the environmental stress on the adhesive 90, to avoid risks such as deformation of the adhesive 90 due to external environmental stress as well as deformation and fracture of the optical filter 20 or breakage of the connection wire 30 due to deformation of the adhesive 90.

In addition, when the adhesive 90 meets the foregoing physical parameter requirement, the adhesive 90 has proper surface tension and moisture, so that when the optical filter 20 is fastened from above the adhesive 90, a part of the adhesive 90 is attached to the surface that is of the optical filter 20 and that is close to the image sensor 10, and epitaxially extends along the surface, rather than attached to a surface that is of the circuit board 52 and that is close to the optical filter 20, and epitaxially extends along the surface, to avoid a problem that the adhesive 90 overflows to the image sensor 10 in an assembly process of the optical filter 20 and causes contamination to the image sensor 10.

In some implementations, for the adhesive 90, the viscosity may be alternatively greater than 15000 Cps, the thixotropic index may be alternatively greater than 4, the Young's modulus at room temperature may be alternatively within a range of 1000 MPa to 6000 MPa, and the coefficient of thermal expansion may be alternatively less than 60 ppm/k. In this case, the adhesive 90 has higher strength, to better resist external environmental stress, and avoid deformation of the adhesive 90 caused by the external environmental stress. In this case, the adhesive 90 can better ensure the height of the adhesive, so that the adhesive can carry the optical filter 20 more stably, thereby avoiding a case in which the optical filter 20 collides with the connection wire 30, causing the connection wire 30 to break. In addition, higher strength of the adhesive 90 can further better avoid fracture of the optical filter 20 caused by deformation of the adhesive 90.

In some implementations, microstrain of a three-point bending fracture surface of the optical filter 20 may be alternatively greater than 4000 ue. In this case, the optical filter 20 has higher strength, to better resist external environmental stress, and avoid deformation and fracture of the optical filter 20 caused by the external environmental stress.

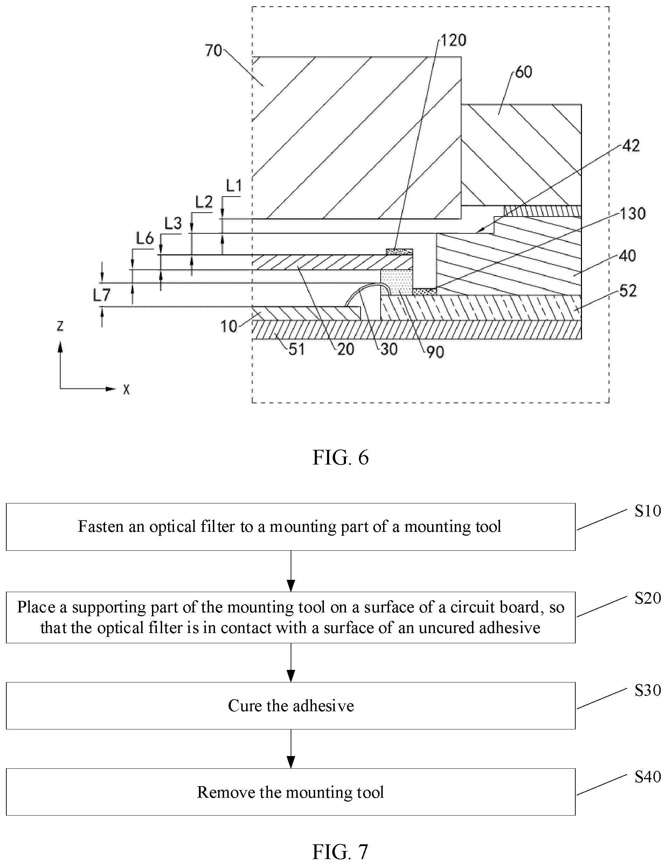

FIG. 6 is an enlarged diagram of the camera module 100 shown in FIG. 4 at a position C.

In the camera module 100 shown in FIG. 6, a flange focal length may include a safe distance L1 for the lens, a height L2 of an anti-collision step, a thickness L3 of the optical filter, a safe distance L6 for the connection wire, and a height L7 of the connection wire. For example, the safe distance L6 for the connection wire may be 30 micrometers. The safe distance L1 for the lens, the height L2 of the anti-collision step, the thickness L3 of the optical filter, and the height L7 of the connection wire may all be the same as those of the camera module 300 shown in FIG. 3.

It may be understood that, compared with the camera module 300 shown in FIG. 2 in which the optical filter 320 is fastened to the fixed step 341 of the base 340, the camera module 100 in this implementation eliminates the need for the fixed step 341, and implements assembly of the optical filter 20 through attachment of the adhesive 90 to the connection wire 30 and fastening of the optical filter 20 to the adhesive 90. In this case, the optical filter 20 may be completely decoupled from a base 40, to effectively avoid a risk of deformation or even fracture of the optical filter 20 caused by deformation of the base 40 due to environmental stress. In this way, the optical filter 20 in this implementation can be resistant to deformation caused by the environmental stress, only when the optical filter meets low microstrain of a three-point bending fracture surface, to effectively reduce manufacturing costs of the optical filter 20.

In addition, the optical filter 20 is supported through the adhesive 90 instead of the fixed step 341, so that a thickness L4 of an adhesive layer in the flange focal length of the camera module 100 and a thickness L5 of the fixed step can be further effectively reduced. In addition, compared with the camera module 300 shown in FIG. 3 in which the connection wire 330 is fully exposed to air, the camera module 300 in this implementation allows unrestricted bending and shaking of the connection wire 330 inside. In this implementation, the adhesive 90 may wrap at least a part of the connection wire 30 and wrap a highest point of the connection wire 30, so that the highest point of the connection wire 30 can be fixed, to avoid a problem that the connection wire 30 collides with another component inside the module due to bending and shaking, causing the connection wire 30 to break. To be specific, in this implementation, the adhesive 90 wraps at least the part of the connection wire 30 and wraps the highest point of the connection wire 30, so that the connection wire 30 can be better protected; and the safe distance L6 for the connection wire in this implementation may be far less than the safe distance L6 for the connection wire in the camera module 300 shown in FIG. 3, so that a thickness of the camera module 100 can be further reduced. In other words, compared with the camera module 300 shown in FIG. 3, the camera module 100 in this implementation can effectively reduce the thickness L4 of the adhesive layer, the thickness L5 of the fixed step, and the safe distance L6 for a part of the connection wire.

In this way, when photographing performance parameters are the same, for the camera module 100 in this implementation, a flange focal length of the camera module 100 can be effectively reduced, to help implement a thin setting of the camera module 100. When module heights are the same, for the camera module 100 in this implementation, a length of an entity part of the lens 70 may be increased, to improve photographing performance of the camera module 100. In other words, for the camera module 100 in this implementation, the flange focal length may be shortened, to improve photographing performance of the camera module 100 and implement a thin setting.

When the safe distance L6 for the connection wire is 30 micrometers, and the safe distance L1 for the lens, the height L2 of the anti-collision step, the thickness L3 of the optical filter, and the height L7 of the connection wire are all the same as those of the camera module 300 shown in FIG. 3, compared with the camera module 300 shown in FIG. 3, the camera module 100 in this implementation can effectively reduce the flange focal length by 300 micrometers, so that an overall height of the module can be effectively reduced by 200 micrometers and the thin setting of the camera module 100 can be implemented. Alternatively, for the camera module 100 in this implementation, a length of a physical part of the lens 70 may be increased by 300 micrometers, so that photographing performance of the camera module 100 is effectively improved without increasing a volume of the camera module 100.

Still as shown in FIG. 4 and FIG. 5 again, the adhesive 90 may have an opening 92. The opening 92 may penetrate an inner circumferential surface and an outer circumferential surface of the adhesive 90. In this case, the internal space 91 of the adhesive 90 may be connected to the internal space 100a of the camera module 100 through the opening 92.

For example, the camera module 100 may further include a breathable membrane 110. The breathable membrane 110 may be attached to the outer circumferential surface of the adhesive 90, and cover the opening 92. In this case, the breathable membrane 110 may cooperate with the adhesive 90 to prevent dust from entering the internal space 91 of the adhesive 90.

For example, the breathable membrane 110 may be a silicone resin adhesive, for example, a moisture-cured silicone resin adhesive. In this case, the breathable membrane 110 may be a breathable adhesive. For example, there may be a plurality of air holes inside the breathable membrane 110. A hole diameter of the air hole may be within a range of 0.5 micrometer to 10 micrometers. In this way, the air hole may allow gas molecules to pass through while blocking liquid molecules and solid molecules from passing through. In other words, the breathable membrane 110 is waterproof and breathable, and has better breathability. In this case, the breathable membrane 110 can prevent dust from entering the internal space 91 of the adhesive 90, and allow gas to circulate in the internal space 91 of the adhesive 90 and the internal space 100a of the camera module 100, so that pressure of the internal space 91 of the adhesive 90 may be kept the same as pressure of the internal space 100a of the camera module 100, that is, pressure of an inner side of the optical filter 20 is the same as that of an outer side of the optical filter 20. This effectively prevents the optical filter 20 from being deformed in an assembly process of the camera module 100 due to process baking stress and pressure difference stress on both sides of the optical filter 20, to effectively reduce a fracture risk of the optical filter 20.

In some implementations, the breathable membrane 110 may alternatively be another adhesive with waterproof and breathable properties. Alternatively, the breathable membrane 110 may be another material such as a film or paper that has waterproof and breathable properties.

In some implementations, when the breathable membrane 110 is attached to an outer side of the opening 92, a part of the breathable membrane 110 may further be filled with the opening 92 of the adhesive 90.

In some other implementations, there may be a plurality of adhesives 90. The plurality of adhesives 90 may be spaced apart on the circuit board 52, and surround the mounting hole 521. The edge part 21 of the optical filter 20 may be connected to a surface that is of a plurality of adhesives 90 and that is far away from the circuit board 52.

Still as shown in FIG. 4 and FIG. 5, the camera module 100 may further include a first dust-proof adhesive 120 and a second dust-proof adhesive 130. The first dust-proof adhesive 120 may be located on a side that is of the optical filter 20 and that is far away from the adhesive 90, and is attached to the edge part 21 of the optical filter 20. The second dust-proof adhesive 130 may be attached to a surface that is of the circuit board 52 and that is close to the lens 70, and surrounds the adhesive 90. Both the first dust-proof adhesive 120 and the second dust-proof adhesive 130 have a dust adhesion capability. Both the first dust-proof adhesive 120 and the second dust-proof adhesive 130 may be an epoxy resin adhesive. In some implementations, the first dust-proof adhesive 120 and the second dust-proof adhesive 130 may alternatively be another adhesive that has a dust adhesion capability.

It may be understood that, in some implementations, there is a gap between the lens 70 and the motor 60 that are of the camera module 100. As a result, some dirty substances may enter the camera module 100 through the gap between the lens 70 and the motor 60, and fall into the filtering part 22 of the optical filter 20, thus causing an imaging shadow. In this implementation, the camera module 100 is provided with the first dust-proof adhesive 120 on the edge part 21 of the optical filter 20 and provided with the second dust-proof adhesive 130 around the adhesive 90, so that dirty substances entering the camera module 100 can be adhered, to prevent the dirty substances from falling on the filtering part 22 of the optical filter 20 or the imaging region 12 of the image sensor 10. This reduces a risk of an imaging shadow in the camera module 100, and effectively improves photographing performance of the camera module 100. In addition, the adhesive 90 may also have a blocking effect on dirty substances, to prevent the dirty substances from entering the internal space 91 of the adhesive 90.

In some implementations, the camera module 100 may be alternatively provided with only the first dust-proof adhesive 120 or only the second dust-proof adhesive 130.

In some implementations, the camera module 100 may further include a third dust-proof adhesive (not shown in the figure). The third dust-proof adhesive may surround a periphery of the optical filter 20 and a periphery of the adhesive 90. The third dust-proof adhesive may be connected to the first dust-proof adhesive 120 and the second dust-proof adhesive 130.

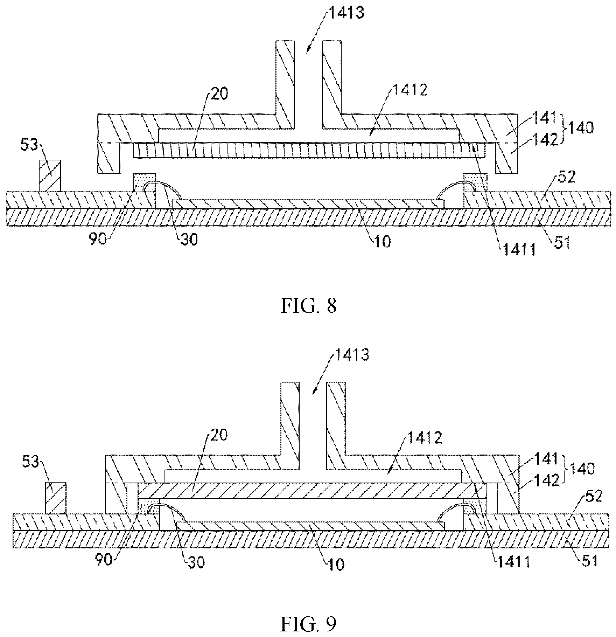

FIG. 7 is a schematic flowchart of a method for assembling the optical filter 20 of the camera module 100 shown in FIG. 4. FIG. 8 is a diagram of a partial process of the assembly method shown in FIG. 7. FIG. 9 is a diagram of a partial process of the assembly method shown in FIG. 7.

For example, the optical filter 20 may be assembled by using a mounting tool (shown in FIG. 8 and FIG. 9). The mounting tool 140 may include a mounting part 141 and a supporting part 142. The mounting part 141 may have a mounting surface 1411. A middle part of the mounting surface 1411 may be recessed inward to form a mounting cavity 1412. The mounting part 141 may further be provided with a first channel 1413. The first channel 1413 may be connected to the mounting cavity 1412.

For example, the supporting part 142 may be fixedly protruded from a periphery of the mounting surface 1411 of the mounting part 141. The supporting part 142 has a specific height. For example, the height of the supporting part 142 of the mounting tool 140 may be equal to a sum of a thickness of the optical filter 20 of the camera module 100 and a height of the adhesive 90.

For example, the supporting part 142 of the mounting tool 140 may further be provided with a light-transmitting part (not shown in the figure). It should be understood that FIG. 8 and FIG. 9 each are a sectional view of only a part of a structure of the mounting tool 140.

In this case, a procedure of the method for assembling the optical filter 20 of the camera module 100 may include steps S10 to S40 shown in FIG. 7.

S10: Fasten the optical filter 20 to the mounting part 141 of the mounting tool 140.

S20: Place the supporting part 142 of the mounting tool 140 on a surface of the circuit board 52, so that the optical filter 20 is in contact with a surface of the uncured adhesive 90.

S30: Cure the adhesive 90.

S40: Remove the mounting tool 140.

When the optical filter 20 is assembled by using the mounting tool 140, the optical filter 20 may be placed on the mounting surface 1411. In this case, the mounting tool 140 may vacuumize the mounting cavity 1412 through the first channel 1413, so that the optical filter 20 may be fastened to the mounting surface 1411 of the mounting tool 140. The supporting part 142 of the mounting tool 140 is then placed on the surface of the circuit board 52, so that the edge part 21 of the optical filter 20 may be in contact with the adhesive 90. Finally, the adhesive 90 is cured. After the adhesive 90 is cured, the mounting tool 140 is removed, and the optical filter 20 is completely assembled.

The adhesive 90 may be an ultraviolet curing adhesive. In this way, the adhesive 90 can be cured by irradiating the adhesive 90 with ultraviolet light. A curing speed of the adhesive 90 is fast, which helps ensure the height of the adhesive 90.

For example, the light-transmitting part of the supporting part 142 may be a hole structure. In this case, ultraviolet light can enter an inner side of the mounting tool 140 through the light-transmitting part, and irradiate the adhesive 90 to cure the adhesive 90. In another implementation, the light-transmitting part of the supporting part 142 may alternatively be a light-transmitting solid structure. In this case, ultraviolet light can irradiate the adhesive 90 through the light-transmitting part, to cure the adhesive 90.

In some other implementations, the adhesive 90 may be alternatively made of another material, and be cured in a manner of static curing, thermal curing, or the like.

It may be understood that, in this implementation, the height of the supporting part 142 of the mounting tool 140 is equal to the sum of the thickness of the optical filter 20 of the camera module 100 and the height of the adhesive 90. In this way, in a process in which the mounting tool 140 is used to assist in assembly of the optical filter 20, the mounting tool 140 may be used to ensure that the optical filter 20 is assembled at a specific height from a surface of the circuit board 52, to avoid a case in which the optical filter 20 collapses onto the adhesive 90 in the assembly process and collides with the connection wire 30, causing the connection wire 30 to break. This helps improve an assembly yield rate of the camera module 100. The optical filter 20 is assembled at a specific height by using the mounting tool 140, which can reduce, to a large extent, a probability that the optical filter 20 collides with the connection wire 30. This can ensure safety of the optical filter 20 as long as a safe distance L6 for the connection wire meets a small size. In other words, a size of the safe distance L6 for the connection wire that is required for assembling the optical filter 20 by using the assembly method in this implementation may be far less than a size of a safe distance L6 for the connection wire that is required for assembling the optical filter 20 by using a conventional method, which helps implement a thinning design of the camera module 100. In this implementation, the optical filter 20 is assembled by using the mounting tool 140, so that the safe distance for the connection wire can be reduced to 30 micrometers. Compared with a safe distance for the connection wire in the camera module 300 shown in FIG. 3, the safe distance for the connection wire in this implementation is effectively reduced by 70 micrometers.

In addition, compared with an implementation in which the adhesive 90 is cured before the optical filter 20 is assembled, in this implementation, the adhesive 90 is cured after the optical filter 20 is assembled, so that the mounting tool 140 can better control the height of the adhesive 90, to accurately reach a design height of the adhesive 90, and accurately control a safe distance between the optical filter 20 and a highest point of the connection wire 30 (namely, the safe distance L6 for the connection wire). This helps ensure assembly precision of the camera module 100 and improve a yield rate of the camera module 100.

In some implementations, the adhesive 90 may be provided with the opening 92. After step S30 or step S40, the opening 92 of the adhesive 90 may be coated with the breathable membrane 110. The breathable membrane 110 may be cured by being left to stand.

In some implementations, the mounting part 141 of the mounting tool 140 may not be provided with the first channel 1413. The mounting tool 140 may alternatively adsorb or fasten the optical filter 20 in another manner.

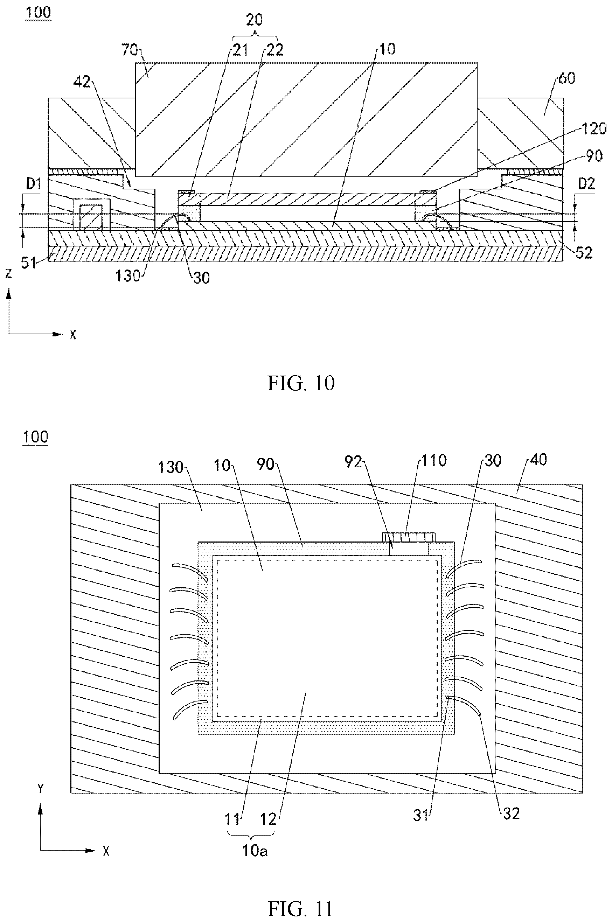

FIG. 10 is a sectional view of the camera module 100 shown in FIG. 4 in another implementation. FIG. 11 is a sectional view of the camera module 100 shown in FIG. 10 at another view angle.

A structure of the camera module 100 in this implementation shown in FIG. 10 and FIG. 11 is roughly the same as that of the camera module 100 shown in FIG. 4. The following mainly describes a difference between the two, and the same part is not described again.

In this implementation, the circuit board 52 may not be provided with the mounting hole 521. The image sensor 10 may be fastened to a surface that is of the circuit board 52 and that is far away from the reinforcing plate 51. In this way, an additional drilling operation does not need to be performed on the circuit board 52, which helps simplify a manufacturing process of the circuit board 52 and reduce costs.

For example, the adhesive 90 may be attached to a surface that is of the image sensor 10 and that is far away from the circuit board 52, and is located in the edge region 11 of the image sensor 10. In this case, the adhesive 90 may wrap at least a part of each connection wire 30. For example, the adhesive 90 may cover the first end 31 of each connection wire 30. An area of a projection of the adhesive 90 on a first plane and an area of a region enclosed by the projection may be close to an area of a projection of the image sensor 10 on the first plane.

For example, the edge part 21 of the optical filter 20 may be fastened to a surface that is of the adhesive 90 and that is far away from the image sensor 10. In this case, an area of a projection of the optical filter 20 on the first plane may be close to an area of a region enclosed by a projection of the adhesive 90 on the first plane, that is, the area of the projection of the optical filter 20 on the first plane may be close to the area of the projection of the image sensor 10 on the first plane. The filtering part 22 of the optical filter 20 may be disposed facing the imaging region 12 of the image sensor 10. The edge part 21 of the optical filter 20 and the edge region 11 of the image sensor 10 may be spaced apart.

It may be understood that, compared with the camera module 100 in which the adhesive 90 is attached to a surface of the circuit board 52, for the camera module 100 in this implementation, the adhesive 90 is attached to a surface of the image sensor 10, so that the optical filter 20 may be indirectly fastened to the image sensor 10 by using the adhesive 90. In this way, the area of the projection of the optical filter 20 on the first plane may be close to the area of the projection of the image sensor 10 on the first plane, so that a volume of the optical filter 20 can be effectively reduced, to reduce space occupied by the optical filter 20 on the first plane. This helps implement miniaturization of the camera module 100.

In addition, the image sensor 10 in this implementation is fastened to a surface of the circuit board 52, so that a highest point of the connection wire 30 may be close to the image sensor 10. In this way, when the adhesive 90 is attached to the surface of the image sensor 10, the adhesive 90 can wrap the highest point of the connection wire 30 while wrapping at least the part of the connection wire 30, so that the connection wire 30 can be better protected, and the highest point of the connection wire 30 can be prevented from being collided with the optical filter 20 or another internal component of the camera module 100, thereby avoiding damage to the connection wire 30.

For example, a height difference, in a Z-axis direction, between the highest point of the connection wire 30 and a surface that is of the image sensor 10 and that is close to the optical filter 20 and is a second distance D2. A height of the adhesive 90 may be greater than the second distance D2. In this case, the adhesive 90 can better wrap the connection wire 30, to protect the connection wire 30 and prevent the connection wire 30 from being broken. In addition, the height of the adhesive 90 is greater than the second distance D2, to avoid a problem that, when the optical filter 20 is assembled, the optical filter 20 collides with the connection wire 30, causing damage to the connection wire 30. For example, the height of the adhesive 90 may be alternatively equal to a sum of a safe distance L6 for the connection wire and the second distance D2. In this case, the height of the adhesive 90 is limited, so that the height is equal to the sum of the safe distance L6 for the connection wire and the second distance D2, to ensure that a safe distance may exist between the highest point of the connection wire 30 and a surface that is of the optical filter 20 and that is close to the image sensor 10. This can effectively prevent the optical filter 20 from being collided with the connection wire 30 in a mounting process, so that the connection wire 30 is not broken, to effectively reduce a risk of damage to the connection wire 30, and help improve a yield rate of the camera module 100.

For example, the second dust-proof adhesive 130 may be attached to the circuit board 52 and surround the image sensor 10. For example, the second dust-proof adhesive 130 may cover the second end 32 of each connection wire 30. In this way, the second dust-proof adhesive 130 and the connection wire 30 may reuse space on the surface of the circuit board 52, which helps improve space utilization of the camera module 100.

For example, a surface that is of the first dust-proof adhesive 120 and that is far away from the optical filter 20 may be lower than the anti-collision step surface 42 of the base 40. This can avoid a problem that fracture of the optical filter 20 is caused because the lens 70 collides with the first dust-proof adhesive 120 or even with the optical filter 20 when the lens 70 moves downward.

In some other implementations, the circuit board 52 may further be provided with a hole. In this case, the image sensor 10 may be placed in the hole. The height of the adhesive 90 may be greater than a sum of the safe distance L6 for the connection wire and the first distance D1, and may also be greater than the sum of the safe distance L6 for the connection wire and the second distance D2, so that the optical filter 20 and the connection wire 30 do not interfere with each other, to avoid collision between the optical filter 20 and the connection wire 30.

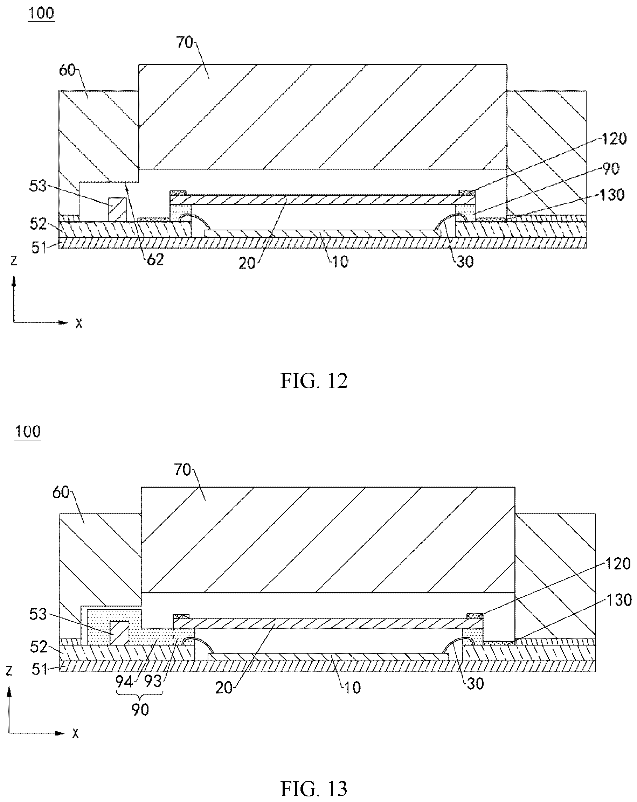

FIG. 12 is a sectional view of the camera module 100 shown in FIG. 4 in still another implementation.

A structure of the camera module 100 in this implementation shown in FIG. 12 is roughly the same as that of the camera module 100 shown in FIG. 4. The same part is not described again. A difference lies in that the camera module 100 in this implementation may not include the base 40. In a manner of bonding or the like, the motor 60 may be fastened to a surface that is of the circuit board 52 and that is far away from the reinforcing plate 51. For example, a part that is of the motor 60 and that is close to the electronic component 53 may be recessed inward to form an avoidance groove 62, to avoid the electronic component 53.

It may be understood that, in this implementation, the base 40 is removed from the camera module 100, so that the structure of the entire camera module 100 is simpler, thereby facilitating a thin setting of the camera module 100. In addition, removal of the base 40 further helps simplify an assembly process of the camera module 100, thereby improving assembly efficiency of the camera module 100.

In some other implementations, a structure solution of the camera module 100 may be further combined with a structure solution of the camera module 100 shown in FIG. 10. For example, in this implementation, the circuit board 52 may alternatively not be provided with the mounting hole 521. The image sensor 10 may be directly fastened to the surface that is of the circuit board 52 and that is far away from the reinforcing plate 51.

FIG. 13 is a sectional view of the camera module 100 shown in FIG. 12 in another implementation.

As shown in FIG. 13, the adhesive 90 may include a first part 93 and a second part 94. The first part 93 of the adhesive 90 may be connected to the optical filter 20. The optical filter 20 may cover the first part 93 of the adhesive 90 in the Z-axis direction. The second part 94 of the adhesive 90 may be connected to the first part 93. The second part 94 may cover at least a part of a surface of the electronic component 53 in the Z-axis direction. In this case, the second part 94 of the adhesive 90 covers a larger part of the surface of the circuit board 52. It may be understood that the second part 94 of the adhesive 90 may be used to protect the electronic component 53, to avoid damage to the electronic component 53 caused by contamination by dirty substances. In addition, the second part 94 of the adhesive 90 may perform structural reinforcement on the circuit board 52, to effectively increase strength of the circuit board 52, improve deformation resistance of the circuit board 52, and reduce a risk of breakage of the circuit board 52. This effectively improves overall structural stability of the camera module 100 and prolongs a service life of the camera module 100. It should be understood that, in FIG. 13, the first part 93 and the second part 94 of the adhesive 90 are schematically obtained through division by using dashed lines.

It should be noted that implementations of this application or features in implementations may be combined with each other if there is no conflict, and any combination of features in different implementations also falls within the protection scope of this application. In other words, the plurality of implementations described above may be alternatively combined based on an actual requirement.

It should be noted that all the foregoing accompanying drawings are example figures of this application, and do not represent actual sizes of products. In addition, a size proportional relationship between components in the accompanying drawings is not intended to limit an actual product in this application.

The foregoing descriptions are merely some implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera module (100), comprising a circuit assembly (50), a motor (60), a lens (70), an image sensor (10), an adhesive (90), and an optical filter (20), wherein the motor (60) is fastened to the circuit assembly (50), the lens (70) is mounted on the motor (60), the image sensor (10) is fastened and electrically connected to the circuit assembly (50), a first surface (10a) of the image sensor (10) is disposed facing the lens (70), the first surface (10a) comprises an imaging region (12) and an edge region (11) surrounding the imaging region (12), the adhesive (90) is attached to the circuit assembly (50) and surrounds the image sensor (10) or the adhesive (90) is attached to the edge region (11) of the first surface (10a), and the optical filter (20) is fastened to a surface that is of the adhesive (90) and that is far away from the circuit assembly (50); and
for the adhesive (90), viscosity is greater than 10000 Cps, a thixotropic index is greater than 2, a Young's modulus at room temperature is within a range of 1000 MPa to 10000 MPa, and a coefficient of thermal expansion is less than 80 ppm/k.

2. The camera module (100) according to claim 1, wherein the camera module (100) further comprises a connection wire (30), the connection wire (30) connects the image sensor (10) to the circuit assembly (50), the adhesive (90) wraps at least a part of the connection wire (30), a gap is formed between the optical filter (20) and a highest point of the connection wire (30), the highest point of the connection wire (30) is a point that is of the connection wire (30) and that is closest to the lens (70) in a first direction, and the first direction is parallel to an optical axis of the lens (70).

3. The camera module (100) according to claim 2, wherein a size, in the first direction, of the optical filter (20) and the highest point of the connection wire (30) is a safe distance (L6) for the connection wire, and the safe distance (L6) for the connection wire is greater than or equal to 30 micrometers.

4. The camera module (100) according to claim 2 or 3, wherein the adhesive (90) wraps the highest point of the connection wire (30).

5. The camera module (100) according to any one of claims 2 to 4, wherein a size of the adhesive (90) in the first direction is within a range of 50 micrometers to 400 micrometers.

6. The camera module (100) according to any one of claims 2 to 5, wherein the circuit assembly (50) comprises a circuit board (52) and a reinforcing plate (51), the motor (60) is fastened to the circuit board (52), the reinforcing plate (51) is fastened to a surface that is of the circuit board (52) and that is far away from the motor (60), the circuit board (52) is provided with a mounting hole (521), at least a part of the reinforcing plate (51) is exposed from the mounting hole (521), the image sensor (10) is fastened to the reinforcing plate (51) and at least a part of the image sensor is located in the mounting hole (521), and the adhesive (90) is attached to a surface that is of the circuit board (52) and that is far away from the reinforcing plate (51); and
a size, in the first direction, of the highest point of the connection wire (30) and the surface that is of the circuit board (52) and that is far away from the reinforcing plate (51) is a first distance (D1), and the size of the adhesive (90) in the first direction is equal to a sum of the safe distance (L6) for the connection wire and the first distance (D1).

7. The camera module (100) according to any one of claims 2 to 5, wherein the circuit assembly (50) comprises a circuit board (52), the motor (60) is fastened to the circuit board (52), the image sensor (10) is fastened to a surface that is of the circuit board (52) and that is close to the lens (70), and the adhesive (90) is attached to the image sensor (10); and
a size, in the first direction, of the highest point of the connection wire (30) and a surface that is of the image sensor (10) and that is far away from the circuit board (52) is a second distance (D2), and the size of the adhesive (90) in the first direction is equal to a sum of the safe distance (L6) for the connection wire and the second distance (D2).

8. The camera module (100) according to any one of claims 1 to 7, wherein the adhesive (90) is an ultraviolet curing adhesive.

9. The camera module (100) according to any one of claims 1 to 8, wherein the adhesive (90), the optical filter (20), and the image sensor (10) jointly enclose internal space (91) of the adhesive (90), or the adhesive (90), the optical filter (20), and the circuit assembly (50) jointly enclose internal space (91) of the adhesive (90), wherein the adhesive (90) is used to prevent dust from entering the internal space (91) of the adhesive (90).

10. The camera module (100) according to any one of claims 1 to 8, wherein the adhesive (90), the optical filter (20), and the image sensor (10) jointly enclose internal space (91) of the adhesive (90), or the adhesive (90), the optical filter (20), and the circuit assembly (50) jointly enclose internal space (91) of the adhesive (90);
the adhesive (90) has an opening (92), the opening (92) penetrates an inner circumferential surface and an outer circumferential surface of the adhesive (90), the camera module (100) further comprises a breathable membrane (110), and the breathable membrane (110) is attached to the adhesive (90) and covers the opening (92); and
the breathable membrane (110) cooperates with the adhesive (90) to prevent dust from entering the internal space (91) of the adhesive (90), and the breathable membrane (110) is used to allow gas to pass through.

11. The camera module (100) according to any one of claims 1 to 10, wherein microstrain of a three-point bending fracture surface of the optical filter (20) is greater than 2000 ue.

12. The camera module (100) according to any one of claims 1 to 11, wherein the optical filter (20) comprises an edge part (21) and a filtering part (22), the edge part (21) surrounds the filtering part (22), the edge part (21) is fastened to the adhesive (90), and the filtering part (22) faces the image sensor (10); and
the camera module (100) further comprises a first dust-proof adhesive (120), wherein the first dust-proof adhesive (120) is located on a side that is of the optical filter (20) and that is far away from the adhesive (90), and is attached to the edge part (21), and the first dust-proof adhesive (120) is used to absorb dust.

13. The camera module (100) according to any one of claims 1 to 12, wherein the camera module (100) further comprises a second dust-proof adhesive (130), and the second dust-proof adhesive (130) is attached to a surface that is of the circuit assembly (50) and that is close to the lens (70), and surrounds the adhesive (90).

14. The camera module (100) according to any one of claims 1 to 13, wherein the camera module (100) further comprises a base (40), the base (40) is fastened to the circuit assembly (50), the motor (60) is fastened to a surface that is of the base (40) and that is far away from the circuit assembly (50), a part of a surface that is of the base (40) and that is close to the lens (70) forms an anti-collision step surface (42), and the anti-collision step surface (42) is located between the lens (70) and the optical filter (20).

15. The camera module (100) according to any one of claims 1 to 13, wherein the adhesive (90) comprises a first part (93) and a second part (94), the first part (93) is connected between the optical filter (20) and the circuit assembly (50), the second part (94) is connected to the first part (93) and the circuit assembly (50), and the second part (94) is used to reinforce the circuit assembly (50).

16. An electronic device, comprising an image processor and the camera module (100) according to any one of claims 1 to 15, wherein the image processor is communicatively connected to the camera module (100), and the image processor is configured to obtain image data from the camera module (100) and process the image data.
